(19) Europäisches Patentamt
European Patent Office
Office européen des brevets

(11) **EP 0 564 991 B1**

(12) **EUROPÄISCHE PATENTSCHRIFT**

(45) Veröffentlichungstag und Bekanntmachung des Hinweises auf die Patenterteilung:
**31.01.1996 Patentblatt 1996/05**

(51) Int. Cl.$^6$: **B01D 46/00**, B01D 51/02

(21) Anmeldenummer: **93105467.0**

(22) Anmeldetag: **02.04.1993**

(54) **Verfahren zum filternden Abscheiden von klebrigen Partikeln**

Process for separating of adhesive particles by filtering

Procédé pour séparer des particules adhésives par filtration

(84) Benannte Vertragsstaaten:
**AT BE CH DE ES FR GB LI NL**

(30) Priorität: **10.04.1992 DE 4212195**

(43) Veröffentlichungstag der Anmeldung:
**13.10.1993 Patentblatt 1993/41**

(73) Patentinhaber: **H KRANTZ-TKT GmbH**
**D-51465 Bergisch Gladbach (DE)**

(72) Erfinder:
• **Gores, Stefan, Dipl.-Ing.**
**W-5100 Aachen (DE)**
• **Karanatsios, Ioannis, Dr.-Ing.**
**W-5120 Herzogenrath-Kohlscheid (DE)**

(74) Vertreter: **Bauer, Hubert, Dipl.-Ing.**
**D-52080 Aachen (DE)**

(56) Entgegenhaltungen:
**DE-A- 3 724 806**      **DE-B- 2 153 777**
**GB-A- 1 518 245**

• **PATENT ABSTRACTS OF JAPAN vol. 16, no. 228 (C-0944) 27. Mai 1992 & JP-A-04 045 827 (HITACHI ZOSEN CORP) 14. Februar 1992**
• **PATENT ABSTRACTS OF JAPAN vol. 6, no. 106 (C-108) (984) 16. Juni 1982 & JP-A-57 035 921 (KANSAI NETSUKAGAKU K.K.) 26. Februar 1982**

## Beschreibung

Die Erfindung betrifft ein Verfahren zum filternden Abscheiden von klebrigen Partikeln aus einem Gasstrom. Dabei wird diesem ein Additiv zudosiert, das zusammen mit den klebrigen Partikeln ausgeschieden wird.

Es ist allgemein bekannt, die Staubabtrennung in filternden Abscheidern mit Hilfe von Precoat-Schichten durchzuführen, wenn die Feststoffteilchen klebrig, feucht, hydroskopisch, glühend oder von sehr feiner Natur und niedriger Konzentration sind. Dabei wird das Filtermedium vor der Filtration mit einer feindispergierten Precoat-Schicht versehen, die einerseits das Filtermedium schützt und andererseits bei besonders feinen Aerosolen niedriger Konzentration vom Filtrationsbeginn an einen guten Abscheidegrad sicherstellt.

Um eine Ersparnis an Precoat-Material zu erzielen, ist es aus USAEC Report No. N 40-1590 R, Harvard Air Cleaning Laboroty, Boston/Mass. (LVA) August 1954, bekannt, das Filtermittel möglichst sanft abzureinigen, so daß nur die auf dem Filtermittel sitzende Precoat-Schicht abgereinigt wird und die in tieferen Lagen des Filtermediums sitzenden Teilchen haften bleiben.

Zur Ermittlung der notwendigen Abreinigungskräfte bzw. der Zugfestigkeit des Systems Filtermittel/Precoat-Schicht wird in der DZ Chem.-Ing. Tech. 61 (1989) Nr. 7, S. 568-569, eine Methode vorgeschlagen, mit der die Zugfestigkeit in der Kontaktzone zwischen Filtermittel und Precoat-Schicht festgestellt wird.

Schließlich ist aus dem Prospekt der Firma Filtra GmbH, Ahlen, "Erleichtern Sie Ihr Leben - Verwenden Sie Neutralite", 1991, auch bereits ein Verfahren der eingangs beschriebenen Art bekannt, um die Leistungfähigkeit einer Filteranlage zu verbessern. Danach wird zunächst zum Schutz der als Filtermedium dienenden Filterschläuche auf diese ein Pulver gleichmäßig aufgesprüht, das einen sehr porösen Filterkuchen bilden soll. Nach dem Aufbau dieses ersten Filterkuchens wird weiterhin Pulver kontinuierlich dem Rohgas beigegeben, um eine dauerhafte Leistungssteigerung der Filteranlage zu erreichen.

Ein wesentlicher Nachteil der bekannten Verfahren ist der Aufwand für das Additiv, das deshalb in möglichst geringen Mengen zum Einsatz kommen soll.

Der Erfindung liegt die Aufgabe zugrunde, ein Verfahren zum filternden Abscheiden von klebrigen Partikeln aus einem Gasstrom vorzuschlagen, bei dem trotz eines geringen Verbrauchs an dem Rohgas kontinuierlich zudosiertem Additiv die klebrigen Partikel hochwirksam daran gehindert werden, mit dem Filtermedium in direkten Kontakt zu geraten, so daß die Abreinigung des Filtermediums erheblich vereinfacht wird.

Zur Losung dieser Aufgabe wird von einem Verfahren der im Oberbegriff des Anspruchs 1 genannten Art ausgegangen und vorgeschlagen, das Additiv in einer solchen Menge den klebrigen Partikeln zuzuführen, daß diese während der Flugphase mit dem Additiv nichtklebrige Agglomerate bilden und die durch das Filtermedium abgeschiedenen Agglomerate mindestens zum Teil als Additiv wiederverwendet werden.

Die zur Bildung nichtklebriger Agglomerate erfindungsgemäß einzusetzende relativ große Menge an Additiv beeinflußt nicht dessen Verbrauchsquantum, da das Additiv aus den Agglomeraten zurückgewonnen wird und zum erneuten Einsatz verfügbar bleibt. Durch die so in Umlauf befindliche Menge an Additiv wird somit nicht dessen Verbrauch erhöht, sondern der beachtliche Vorteil erzielt, die klebrigen Partikel hinreichend dicht mit einer Additivschicht zu ummanteln und dabei zu keiner weiteren Verklebung neigende Agglomerate zu erhalten, die sich leicht vom Filtermedium abtrennen lassen.

Durch Versuche konnte nachgewiesen werden, daß gute Abscheideleistungen und eine rückstandsfreie Abreinigung des Filtermediums leicht erzielbar sind, wenn die Menge des zudosierten Additivs zur Menge der im Gasstrom enthaltenen klebrigen Partikel mindestens 50:1, vorzugsweise 70-80:1, beträgt.

Durch dieses Mengenverhältnis läßt sich gewährleisten, daß Partikel mit einem äußerst hohen Anteil klebriger Substanz einer hinreichend großen Additivmenge ausgesetzt sind, um die Partikel mit einem dichten Additivmantel vollständig so zu umhüllen, daß die Mantelaußenseite keine klebrigen Bereiche mehr aufweist.

Die Kontaktdauer des Additivs mit den klebrigen Partikeln in der Flugphase sollte mindestens 0,1 sec. und höchstens 6 sec., vorzugsweise 2-3 sec., betragen.

Vorzugsweise sind die Geschwindigkeit und die Geometrie des Gasstromes während der Kontaktdauer des Additivs mit den klebrigen Partikeln so eingestellt, daß die Reynolds-Zahl Re mindestens $5 \times 10^2$ und höchstens $5 \times 10^8$ beträgt.

Um die Adsorption von Schadstoffen bereits in der Flugphase der Partikel einzuleiten, empfiehlt es sich, das Additiv mindestens zum Teil aus Adsorptionsmaterial herzustellen.

Die Wirkung des ursprünglich in Form der Agglomerate durch das Filtermedium abgeschiedenen Additivs läßt sich nahezu unverändert dadurch wieder herstellen, daß die abgeschiedenen Agglomerate ausgehärtet und sodann aufgemahlen werden.

Zur Gewährleistung einer absolut konstanten Dauerwirkung des Additivs kann kontinuierlich ein Teil der Agglomerate dem Kreislauf entzogen und durch gänzlich neues Additiv in einer Menge ersetzt werden, die dem Additivanteil in den entzogenen Agglomeraten entspricht.

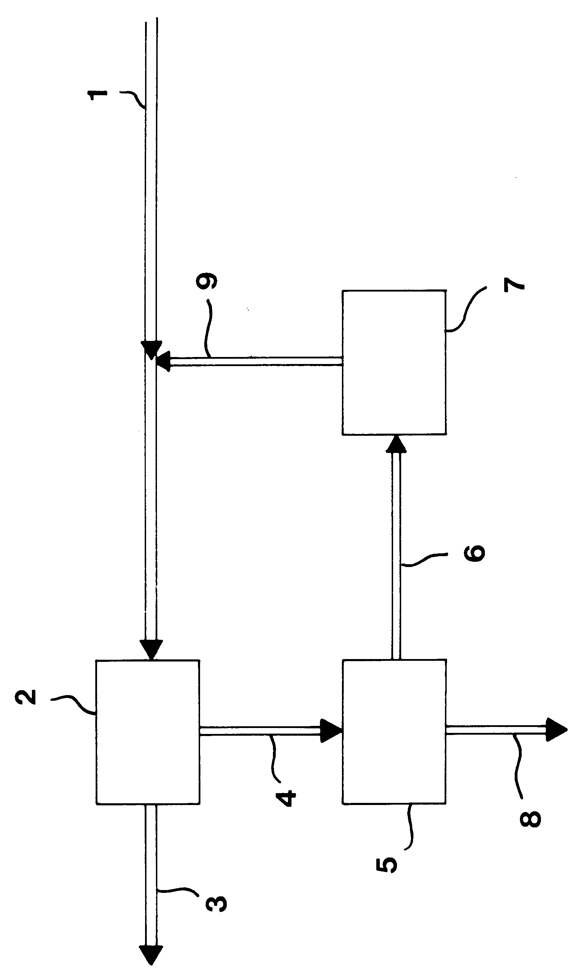

In der Zeichnung ist ein Ausführungsbeispiel einer Anlage zur Durchführung des erfindungsgemäßen Verfahrens in Form eines Blockschaltbildes schematisch dargestellt:

Aus einer nicht dargestellten Lackierkabine wird über eine Leitung 1 Abluft einer Filteranlage 2 zugeführt. Über eine Leitung 3 verläßt Reingas die Filteranlage 2, von der abgeschiedene Partikelagglomerate über eine Leitung 4 einem Vorratsbehälter 5 zugeführt werden, in dem die Partikelagglomerate aushärten und teilweise über eine Leitung 6 einer Mahlanlage 7 zugeführt und teilweise über eine Leitung 8 entsorgt werden. Die in der Mahlanlage 7 aufgemahlenen Agglomerate werden über eine Leitung 9 als Additiv in die Leitung 1 geblasen. Mit dem Additiv werden vom Rohgasstrom mitgeführte klebrige Partikel beaufschlagt und bilden die in einfacher Weise von der Filteranlage 2 abzuscheidenden Agglomerate.

In der Lackierkabine werden mit der Abluft sowohl der beim Lackierprozeß ungenutzte Lacknebel sowie die bereits in der Gasphase befindlichen Lösemittelbestandteile erfaßt. Diese bestehen zu etwa gleichen Anteilen aus Aromaten, Estern und Alkoholen.

Besteht der Rohgasstrom aus $\dot{V}$ = 50.000 m³/h mit C Lack$_{Roh}$ = ca. 100 mg/m³ und C Lösemittel$_{Roh}$ = ca. 350 mg/m³, lassen sich durch Zudosieren von 10 g/m³ eines 2-Stoff-Additivs aus Aktivkohle und Kalziumhydroxid mit deren Abscheidung auf einer regenerierbaren Schwebstoffilterzelle mindestens 99,7 % der klebrigen Lackpartikel aus dem Rohgasstrom entfernen und mindestens 94 % der gasförmigen Lösemittelbestandteile in der Flugphase vom Additiv adsorbieren. Dabei sollte die Verweilzeit des Additivs in der Rohgasströmung 1 sec. betragen.

Bei einer Additivzusammensetzung von 15 % Aktivkohle und 85 % Kalziumhydroxid ist erreichbar, daß im vorgenannten Zahlenbeispiel

C Lack$_{Rein}$ 0,3 mg/m$_N^3$

und

C Lösemittel$_{Rein}$ 20 mg/m$_N^3$.

Mit dem erfindungsgemäßen Verfahren können nicht nur klebrige Partikel abgeschieden, sondern auch gasförmige Stoffe, wie beispiele FCKW's, Aliphate, Ketone und Glykole, adsorbiert und anschließend abgeschieden werden.

## Patentansprüche

1. Verfahren zum filternden Abscheiden von klebrigen Partikeln aus einem Gasstrom, dem ein Additiv zudosiert wird, das zusammen mit den klebrigen Partikeln durch ein Filtermedium abgeschieden wird, dadurch gekennzeichnet, daß das Additiv in einer solchen Menge den klebrigen Partikeln zugeführt wird, daß diese während der Flugphase mit dem Additiv nichtklebrige Agglomerate bilden und daß die durch das Filtermedium abgeschiedenen Agglomerate mindestens zum Teil als Additiv wiederverwendet werden.

2. Verfahren nach Anspruch 1, dadurch gekennzeichnet, daß die Menge des zudosierten Additivs zur Menge der im Gasstrom enthaltenen klebrigen Partikel mindestens 50:1, vorzugsweise 70-80:1, beträgt.

3. Verfahren nach Anspruch 1 oder 2, dadurch gekennzeichnet, daß die Kontaktdauer des Additivs mit den klebrigen Partikeln in der Flugphase mindestens 0,1 sec. und höchstens 6 sec., vorzugsweise 2-3 sec., beträgt.

4. Verfahren nach einem der Ansprüche 1 bis 3, dadurch gekennzeichnet, daß die Geschwindigkeit und die Geometrie des Gasstromes während der Kontaktdauer des Additivs mit den klebrigen Partikeln so eingestellt werden, daß die Reynolds-Zahl Re mindestens 5x10² und höchstens 5x10⁸ beträgt.

5. Verfahren nach einem der Ansprüche 1 bis 4, dadurch gekennzeichnet, daß das Additiv mindestens zum Teil aus Adsorptionsmaterial hergestellt wird.

6. Verfahren nach einem der Ansprüche 1 bis 5, dadurch gekennzeichnet, daß die durch das Filtermedium abgeschiedenen Agglomerate vor ihrer Wiederverwendung als Additiv ausgehärtet und aufgemahlen werden.

7. Verfahren nach einem der Ansprüche 1 bis 6, dadurch gekennzeichnet, daß ein Teil der Agglomerate dem Kreislauf entzogen und durch neues Additiv in einer Menge ersetzt wird, die dem Additivanteil in den entzogenen Agglomeraten entspricht.

## Claims

1. A process for filtered separation of sticky particles from a gas flow to which is apportioned an additive which is separated together with the sticky particles by a filter medium, **characterized in that** the additive is fed to the sticky particles at such quantity that the latter together with the additive form non-sticky agglomerates during the flying phase and that the agglomerates separated by the filter medium are at least partially re-used as an additive.

2. A process according to claim 1, **characterized in that** the quantity of apportioned additive relative to the quantity of sticky particles contained in the gas flow is at least 50 : 1, preferably 70 - 80 : 1.

3. A process according to claim 1 or 2, **characterized in that** the contact duration of the additive with the sticky particles in the flying phase is at least 0.1 sec and maximum 6 sec., preferably 2 - 3 sec.

4. A process according to one of claims 1 to 3, **characterized in that** the speed and the geometry of the gas flow during contact of the additive with the sticky particles is set in such a manner that the Reynold's number Re is at least 5 x 10² and maximum 5 x 10⁸.

5. A process according to one of claims 1 to 4, **characterized in that** the additive is at least partially made of adsorption material.

6. A process according to one of claims 1 to 5, **characterized in that** the agglomerates which have been separated by the filter medium are hardened and ground prior to being re-used as an additive.

7. A process according to one of claims 1 to 6, **characterized in that** a portion of the agglomerates is withdrawn from circulation and replaced by a new additive in a quantity which corresponds with the additive proportion in the extracted agglomerates.

## Revendications

1. Procédé pour séparer des particules adhésives par filtration d'un écoulement de gaz auquel est ajouté une quantité réglée d'un additif qui, avec les particules adhésives, est séparée par un moyen de filtration, caractérisé par le fait qu'une telle quantité réglée d'additif est ajoutée aux particules adhésives que ces particules forment, avec l'additif, pendant la phase de suspension des agglomérats non adhésifs et que les agglomérats séparés par le moyen de filtration sont, tout au moins partiellement, réutilisés comme additif.

2. Procédé selon la revendication 1, caractérisé par le fait que la quantité réglée d'additif ajoutée à la quantité de particules adhésives contenues dans l'écoulement de gaz est d'au moins 50:1, de préférence de 70-80:1.

3. Procédé selon l'une ou l'autre des revendications 1 ou 2, caractérisé par le fait que la durée de contact de l'additif avec les particules adhésives pendant la phase de suspension est au minimum de 0,1 sec. et au maximum de 6 sec., de préférence de 2-3 sec.

4. Procédé selon l'une quelconque des revendications 1 à 3, caractérisé par le fait que la vitesse et la géométrie de l'écoulement de gaz pendant la durée de contact de l'additif avec les particules adhésives sont réglées de manière que le nombre de Reynolds Re soit au minimum de $5 \times 10^2$ et au maximum de $5 \times 10^8$.

5. Procédé selon l'une quelconque des revendications 1 à 4, caractérisé par le fait que l'additif est, tout au moins partiellement, composé de matériau d'adsorption.

6. Procédé selon l'une quelconque des revendications 1 à 5, caractérisé par le fait que les agglomérats séparés par le moyen de filtration sont durcis et broyés avant leur réutilisation comme additif.

7. Procédé selon l'une quelconque des revendications 1 à 6, caractérisé par le fait qu'une partie des agglomérats est retirée du circuit et remplacée par une quantité d'additif nouveau correspondant à la partie d'additif située dans les agglomérats retirés.